# FASCICULE DE BREVET EUROPEEN

(11) **EP 2 895 411 B1**
(45) Date de publication et mention de la délivrance du brevet: **25.04.2018**
(21) Numéro de dépôt: 13773291.3
(22) Date de dépôt: 13.09.2013
(51) Int. Cl.: B65G 59/08, B65G 65/23

(54) **ENSEMBLE DE DÉCHARGEMENT DE CHARGES SUPERPOSÉES**
ANORDNUNG ZUR ENTLADUNG GESTAPELTER LASTEN
ASSEMBLY FOR UNLOADING STACKED LOADS

(30) Priorité: 14.09.2012 FR 1258638
(43) Date de publication de la demande: 22.07.2015
(73) Titulaire: Materials Technologies, 49110 Le-Pin-en-Mauges (FR)
(72) Inventeur: JAUBERT, Yann, F-78350 Jouy en Josas (FR); COUDAMY, Gérard, F-87000 Limoges (FR)
(74) Mandataire: Petit, Maxime
(86) Numéro de dépôt international: PCT/FR2013/052103
(87) Numéro de publication internationale: WO 2014/041312

(56) Documents cités:
- EP-A1- 0 349 398
- DE-A1-102009 033 455
- DE-U1-202004 007 886
- GB-A- 882 833
- US-A- 4 106 635
- US-A1- 2001 012 482

## Description

La présente invention concerne un ensemble de déchargement comprenant un convoyeur et un dispositif de déchargement de charges superposées selon le préambule de la revendication 1, destiné à être utilisé en particulier dans les centres de tri de colis, mais aussi dans de nombreuses industries.

Les charges à décharger dans une trémie ou sur un convoyeur sous forme d'un tapis transporteur ou autre support sont en général superposées les unes sur les autres sur des palettes et retenues ensemble par un film pour faciliter le transport de l'ensemble des charges accumulées sur les palettes.

Aujourd'hui, le déchargement s'effectue la plupart du temps manuellement par des opérateurs. Dans certains secteurs, notamment la messagerie dans le sens d'acheminement rapide de colis et de marchandises, un dispositif basculant assure le déchargement automatique des charges. Cependant, l'opération de déchargement par basculement induit des chocs mécaniques violents entre charges et les éléments formant support de réception tels que tapis transporteurs, parois de trémie etc.

Un dispositif basculant de ce genre est connu du DE102009033455 qui décrit en particulier un dispositif de déchargement de conteneurs sur roulettes. Le châssis du conteneur comporte deux parois latérales reliées l'une à l'autre par une paroi transversale, alors qu'il est ouvert vers le haut et présente une face ouverte opposée à la paroi transversale. Le dispositif comporte des moyens de basculement du châssis autour d'un axe horizontal comportant un tronçon de transporteur monté basculant entre une position horizontale et une position verticale dans laquelle il couvre la face ouverte du conteneur. L'ensemble est ensuite basculé vers la position horizontale, suite à quoi seul le conteneur est basculé vers sa position verticale de départ, alors que les charges restent sur le tronçon de convoyeur. Un inconvénient de ce dispositif est qu'il génère des chocs importants pour les charges superposées qui tombent sur le tronçon de convoyeur. Pour cette raison, il est indispensable de prévoir un dispositif à ressorts disposé dans l'intérieur du tronçon de convoyeur. Un autre inconvénient est que ce dispositif ne peut pas être utilisé pour décharger des palettes portant des charges superposées.

Le EP 0 562 688 décrit un autre dispositif de ce genre destiné à décharger un conteneur de marchandises en colis, plus particulièrement de colis postaux. Il comporte un châssis monté basculant et apte à recevoir un conteneur. Ce châssis est pourvu d'une porte de déchargement pouvant pivoter dans le châssis et contre
châssis peut être basculé vers une position de déchargement et la porte est alors ouverte pour le déchargement du conteneur sur un transporteur de déchargement.

Cependant, ce dispositif ne permet pas de réduire les chocs lorsque les colis tombent sur le transporteur. En outre, il est relativement complexe et ne peut pas recevoir des palettes sur lesquelles les charges sont superposées.

Le US 2001/012482 concerne un ensemble de déchargement comprenant un convoyeur et un dispositif de déchargement de charges superposées, de blocs en béton, de briques, de pavés et similaires sur un convoyeur, selon le préambule de la revendication 1. Ce dispositif comporte un châssis comprenant deux parois latérales fixées de part et d'autre d'une plateforme formant fond sur laquelle une palette portant des blocs empilés peut être placée. L'ensemble du châssis peut être incliné et déplacé vers le haut afin de décharger les blocs couche par couche par gravité en les faisant glisser d'abord sur une plaque inclinée pour ensuite tomber en vrac sur un convoyeur placé plus bas, souvent les uns sur les autres. Il est évident que ce dispositif ne peut pas non plus assurer le déchargement avec un minimum de chocs mécaniques.

Le document EP0349398 décrit des conteneurs présentoirs, en particulier des conteneurs à roulettes formant chariots et destinés notamment à recevoir des articles empaquetés afin de présenter ceux-ci à la vente dans des magasins.

Le document US4106635 décrit un système permettant de séparer un à un des articles qui ont été empilés afin que le chargement de ces articles sur des camions ou des wagons de marchandises puisse être effectué plus facilement et dans un temps plus court que lors d'une exécution manuelle.

Le document DE202004007886 décrit un dispositif sur lequel peuvent être placées des bacs contenant par exemple des produits agricoles et permettant de basculer ces bacs afin d'accéder facilement à leur contenu.

Le document GB882833 décrit un dispositif permettant de transporter du bois à partir d'un support, tel qu'un camion, vers un convoyeur ou une machine à bois.

D'une manière générale, les dispositifs connus à basculement sont limités à certains types de charges dites « non fragiles », ce qui limite fortement l'usage de ce type de dispositifs de déchargement par basculement.

Le but de l'invention est de proposer un dispositif de déchargement apte à recevoir des palettes portant des charges superposées et assurant le déchargement avec un minimum de chocs mécaniques sur les charges suivant un flux instantané le plus régulier possible. Ainsi, le dispositif de déchargement selon l'invention permet de régulariser le flux des charges lors du déchargement et d'obtenir un effet d'égrenage très efficace des charges déplacées sur un convoyeur. Un autre avantage du dispositif de déchargement selon l'invention est qu'il permet d'ajuster très facilement la cadence de déchargement afin d'obtenir un déchargement progressif et régulier.

L'objet de l'invention est un ensemble de déchargement comprenant un convoyeur et un dispositif de déchargement de charges superposés, selon la revendication 1. Selon d'autres caractéristiques de l'invention :
- l'angle de basculement du châssis est d'environ 30° à environ 60° ;
- l'angle de basculement est adapté pour être inférieur à celui nécessaire pour le déversement gravitaire des charges ;
- lesdits moyens de déplacement de la palette comportent des organes de levage montés déplaçables de manière synchronisée dans les parois latérales le long d'au moins une fente longitudinale respective prévue dans l'une et l'autre de celles-ci ;
- lesdits organes de levage sont reliés à une plaque de réception formant fond mobile du châssis ;
- la hauteur de la face supérieure de l'extrémité proximale du convoyeur est adaptée pour que le bord supérieur de la paroi transversale soit sensiblement au même niveau que ladite face supérieure lorsque le châssis est dans sa position inclinée vers le convoyeur ;
- les parois latérales du châssis sont prolongées en haut par des plaques de guidage aptes à s'étendre au-dessus de l'extrémité proximale du convoyeur lorsque le châssis est dans sa position inclinée ;
- lesdites vitesses sont déterminées de façon que la vitesse du convoyeur est au moins trois fois supérieure à la vitesse d'élévation de la palette, et de préférence cinq fois supérieure.
- ledit châssis est basculé à l'aide de moyens de basculement comportant une crémaillère en arc ce cercle fixée sur la face extérieure de la paroi transversale du châssis et en prise avec une roue dentée entraînée par un moteur électrique ;
- le châssis vient dans sa position inclinée en appui contre une structure d'appui disposée entre le châssis et l'extrémité proximale du convoyeur ; et
- ladite structure d'appui comporte une surface inclinée formant butée au châssis lors du basculement de celui-ci vers le convoyeur.

D'autres caractéristiques et avantages de l'invention ressortiront de la description qui va suivre d'un mode de réalisation non limitatif de l'invention, en référence aux figures annexées dans lesquelles :
- la figure 1 est une vue générale en perspective, de derrière, d'une installation de déchargement comportant deux dispositifs de déchargement selon l'invention ;
- la figure 2 est une vue en perspective d'un dispositif de déchargement selon l'invention, montrant le dispositif dans un état de repos, prêt à recevoir une palette ;
- la figure 3 est une vue en perspective, partiellement arrachée, du dispositif de déchargement de la figure 2, montrant les moyens de basculement du châssis du dispositif et les moyens de levage prévus sur les parois latérales du châssis,
- la figure 4 est une vue en perspective du dispositif de déchargement de la figure 2, en position inclinée du châssis vers un convoyeur pour le déchargement ; et
- les figures 5 à 7 sont des vues en perspective illustrant une séquence de déplacement vers le haut d'une palette disposée à l'intérieur du châssis du dispositif selon l'invention.

Dans les figures, les éléments identiques ou équivalents porteront les mêmes signes de référence.

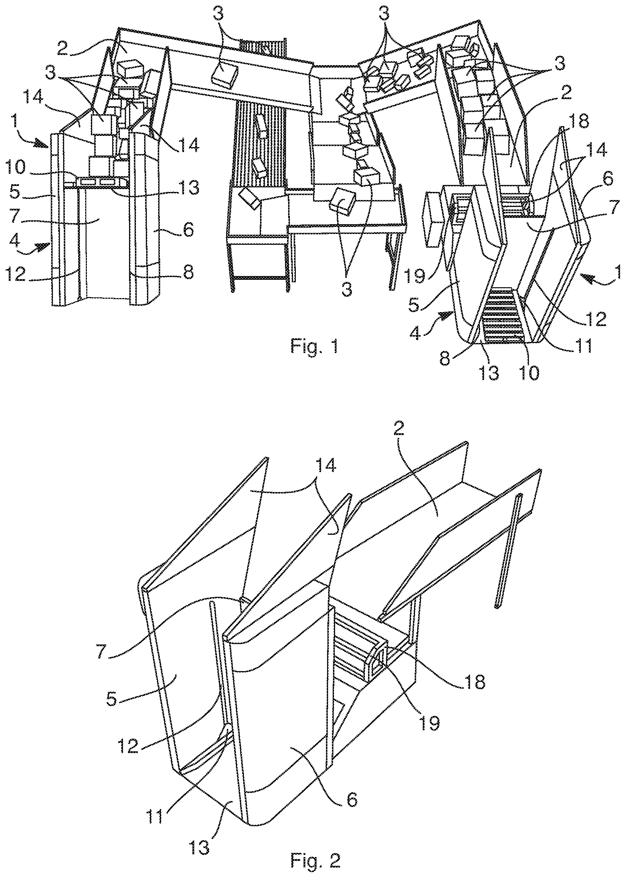

La figure 1 montre une installation de déchargement comprenant deux dispositifs de déchargement 1 selon l'invention. Ces dispositifs de déchargement sont identiques, chacun étant associé à un convoyeur 2 recevant les charges 3 déchargées des dispositifs de déchargement. Dans l'exemple illustré, les charges 3 sont des colis de messagerie à trier.

Les flux de colis des convoyeurs 2 sont réunis en un seul flux sur un convoyeur commun pour transporter les colis vers une station de tri (non représentée).

La figure 2 montre le dispositif de déchargement 1 selon l'invention dans un état de repos.

Le dispositif de déchargement 1 comporte un châssis 4 comprenant deux parois latérales 5, 6 reliées l'une à l'autre par une paroi transversale 7. Le châssis 4 est ouvert vers le haut et présente une face ouverte 8 opposée à la paroi transversale 7.

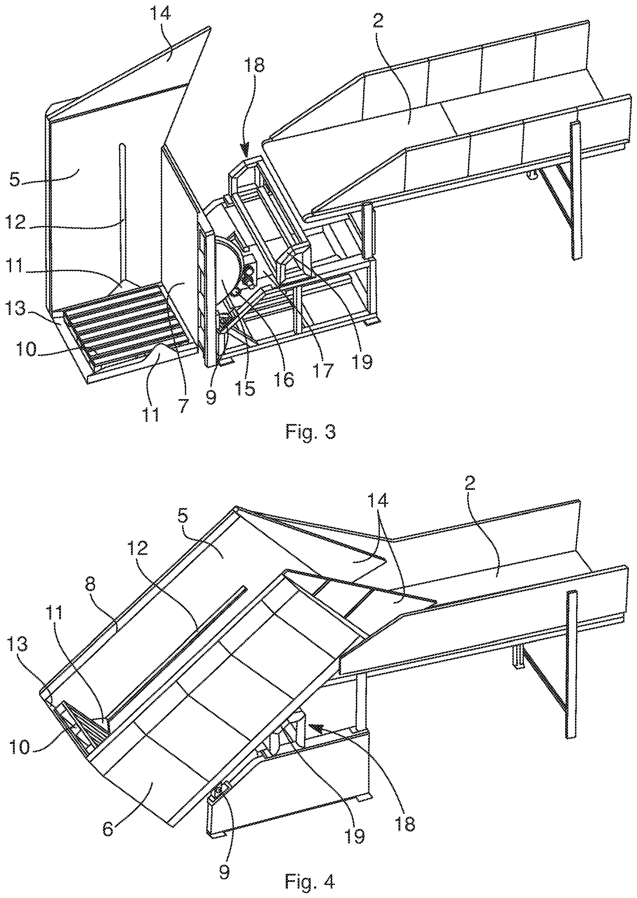

Le châssis 4 du dispositif de déchargement 1 est monté basculant autour d'un axe horizontal 9 (voir figures 3 et 4) afin de permettre de vider les colis 3 sur le convoyeur 2 associé au dispositif comme cela sera décrit plus loin.

La face ouverte 8 du châssis 4 est dirigée en arrière de manière à permettre l'introduction d'une palette 10 avec des colis superposés à l'intérieur du châssis. Le mot palette ne doit pas être compris comme une limitation, mais comprend chaque support plan sur lequel des colis peuvent être superposés et fixés ensemble à l'aide de par exemple un film qui les enveloppe.

La hauteur des parois 5, 6 et 7 du châssis 4 est adaptée pour offrir un appui latérale sur trois côtés au charges 3 empilées les unes sur les autres jusqu'à une hauteur d'environ 2,4 m.

Selon une caractéristique importante de l'invention, le dispositif de déchargement comporte des moyens de déplacement de la palette 10 du bas vers le haut et inversement à l'intérieur du châssis 4 de manière à permettre de vider progressivement les colis 3 sur le convoyeur 2 lorsque le châssis 4 est dans sa position inclinée. La hauteur de la paroi transversale 7 est adaptée pour que son bord supérieur soit sensiblement aligné sur la face supérieure du convoyeur 2 lorsque le châssis 4 est dans sa position inclinée vers le convoyeur.

La hauteur de la face supérieure de l'extrémité proximale du convoyeur 2 est adaptée pour que le bord supérieur de la paroi transversale 7 soit sensiblement au même niveau que la face supérieure du convoyeur lorsque le châssis 4 est dans sa position inclinée vers le convoyeur.

L'angle de basculement du châssis 4 est d'environ 30° à environ 60° et est de préférence adapté pour être inférieur à celui nécessaire pour le déversement gravitaire des colis 3 sur le convoyeur 2. Une valeur préférée de l'angle de basculement du châssis 4 est d'environ 45°.

Les moyens de déplacement de la palette 10 vers le haut et inversement comportent des organes de levage montés déplaçables de manière synchronisée dans les parois latérales 5, 6 le long d'au moins une fente longitudinale 12 respective prévue dans l'une et l'autre des parois latérales. Ces organes de levage peuvent par exemple comprendre des vérins (non représentés).

Selon une autre caractéristique de l'invention, les organes de levage 11 sont reliés de part et d'autre d'une plaque de réception 13 formant fond mobile du châssis 4.

Cette plaque de réception 13 est apte à recevoir une palette 10 pour le déplacer vers le haut et vers le bas à l'intérieur du châssis 4.

Afin d'empêcher les colis 3 de tomber sur les côtés lors du déchargement, les parois latérales 5, 6 du châssis 4 sont prolongées en haut par des plaques de guidage 14 aptes à s'étendre au-dessus de l'extrémité proximale du convoyeur 2 lorsque le châssis est dans sa position inclinée vers le convoyeur 2. Dans l'exemple illustré, ces plaques de guidage 14 présentent une forme triangulaire.

Le châssis 4 est basculé de sa position redressée dans sa position inclinée vers le convoyeur 2 à l'aide de moyens de basculement qui dans l'exemple illustré comportent une crémaillère en arc de cercle 15 fixée sur la face extérieure de la paroi transversale 7 du châssis et en prise avec une roue dentée 16 entraînée par un moteur électrique 17.

Le moteur électrique 17 est porté par une structure 18 disposée entre le châssis 4 et l'extrémité proximale du convoyeur. Cette structure sert de structure d'appui au châssis dans la position inclinée de celui-ci. La structure d'appui 18 comporte une surface inclinée 19 formant butée au châssis 4 lors du basculement de celui-ci vers le convoyeur 2.

Le dispositif de déchargement 1 selon l'invention fonctionne de la manière suivante à partir de l'état du dispositif tel qu'illustré à la figure 2.

Une palette 10 portant des charges superposées 3 est déplacée à proximité immédiate du dispositif de déchargement 1, par exemple à l'aide d'une transpalette ou d'un chariot élévateur (non représentés). Si les charges sont enveloppées par un film, celui-ci est enlevé, par exemple à l'aide d'un cutter.

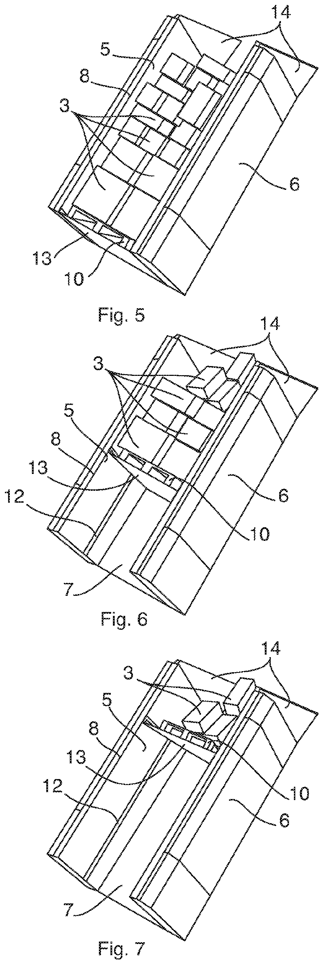

Ensuite, la palette 10 portant les charges 3 est introduite à l'intérieur du châssis 4 par la face ouverte 8 de celui-ci et déposée sur la plaque de réception 13. Le châssis est alors basculé en direction du convoyeur dans sa position inclinée illustré à la figure 4. Dans cette position inclinée, les charges 3 se trouveront en appui contre la paroi transversale 7 du châssis (voir figures 5 à 7).

La plaque de réception 13 est ensuite déplacée à partir de la position illustrée à la figure 5 vers le haut à l'aide des organes de levage 11. Comme le bord supérieur de la paroi transversale 7 du châssis se trouve au même niveau que la face supérieure de l'extrémité proximale du convoyeur 2, et grâce à l'inclinaison du châssis, les charges se trouvant au sommet vont se déplacer sur le convoyeur, sans chocs. Ce transfert des charges sur le convoyeur se fait progressivement au fur et à mesure que la palette 10 est déplacée vers le haut et on obtient automatiquement un effet d'égrenage des charges très efficace.

L'effet d'égrenage peut être renforcé davantage en augmentant la vitesse V1 du convoyeur 2 par rapport à la vitesse d'élévation V2 de la plaque de réception 13 portant la palette 10. Ainsi, les vitesses sont déterminées de façon que l'on ait : V1 > V2, de préférence V1 > 3xV2, et plus préférentiellement V1 > 5xV2. A titre indicatif, la vitesse V2 est de préférence comprise entre 0,5 et 1,5 m/s.

On obtient ainsi une séparation efficace des charges 3 sur le convoyeur 2, dans un seul plan au lieu d'un tas comme c'est le cas avec les équipements connus fonctionnant par basculement. Ceci améliore en outre les performances des différents dispositifs qui sont installés en aval du dispositif de déchargement 1 tels que ceux destinés à la singulation, la mesure des dimensions, le pesage et la lecture de codes.

En outre, des moyens de retenu (non représentés) de la palette 10 peuvent si besoin en est être prévus en fonction de l'angle final de basculement qui sera utilisé. Ces moyens de retenu sont alors associés aux organes de levage 11. D'une manière générale, l'angle de basculement est déterminé de façon à éviter les effets d'avalanche créés par les dispositifs à basculement connus.

Par ailleurs, la vitesse de déplacement de la palette 10 vers le haut qui est déterminant pour le flux des charges 3 quittant le dispositif de déchargement pour se déplacer sur le convoyeur 2 peut avantageusement être réglée par un opérateur ou commandée par un dispositif de commande (non représenté) du moteur d'entrainement 17 des organes de levage 11 qui prend en considération la hauteur de la charge et /ou le flux des charges à l'aide de cellules photoélectriques ou au moins une caméra vidéo (non représentées).

De cette manière est obtenu une cadence de déchargement optimisée autoréglable, ce qui assure, en conjugaison avec le convoyeur 2, un effet d'égrenage des charges 3.

Grâce au dispositif de déchargement, on obtient un flux des charges qui est beaucoup plus régulier qu'avec les dispositifs à basculement connus, ce qui permet d'éviter les surdimensionnement des équipements et / ou de limiter les effets de saturation et / ou peut augmenter la capacité de traitement des charges, en particulier des colis de messagerie.

Le dispositif selon l'invention est particulièrement bien adapté pour être utilisé pour la messagerie, mais il peut également trouver son application dans de nombreuses industries.

## Revendications

1. Ensemble de déchargement comprenant un convoyeur (2) et un dispositif (1) de déchargement de charges superposées (3), le dispositif comprenant un châssis (4) comportant deux parois latérales (5, 6) reliées l'une à l'autre par une paroi transversale (7), ledit châssis (4) étant ouvert vers le haut et présentant une face ouverte (8) opposée à ladite paroi transversale (7) et dirigée en arrière de manière à permettre l'introduction d'une palette chargée (10) à l'intérieur du châssis (4), ledit châssis (4) étant monté basculant autour d'un axe horizontal (9) afin de permettre de vider les charges (3) sur le convoyeur (2) lorsque le châssis
est basculé dans une position inclinée en direction du convoyeur, ledit dispositif comportant en outre des moyens de déplacement (11) de la palette (10) du bas vers le haut et inversement à l'intérieur dudit châssis (4) de manière à permettre de vider progressivement les charges (3) sur le convoyeur (2) lorsque le châssis (4) est dans sa position inclinée; ledit dispositif étant **caractérisé en ce que** le châssis (4) étant agencé vis-à-vis du convoyeur (2) de telle façon que, lorsque le châssis (4) est dans sa position inclinée vers le convoyeur, le bord supérieur de sa paroi transversale (7) est sensiblement aligné sur la face supérieure du convoyeur (2), la hauteur de la paroi transversale (7) du châssis (4) étant définie à cet effet, et **en ce que** la vitesse (V1) du convoyeur (2) étant plusieurs fois supérieure à la vitesse d'élévation (V2) de la palette (10) de manière à obtenir un égrenage efficace des charges.

2. Ensemble de déchargement selon la revendication 1, **caractérisé en ce que** lesdits moyens de déplacement de la palette comportent des organes de levage (11) montés déplaçables de manière synchronisée dans les parois latérales (5, 6) le long d'au moins une fente longitudinale respective (12) prévue dans l'une et l'autre de celles-ci.

3. Ensemble de déchargement selon la revendication 2, **caractérisé en ce que** lesdits organes de levage (11) sont reliés à une plaque de réception (13) formant fond mobile du châssis.

4. Ensemble de déchargement selon l'une quelconque des revendications précédentes, **caractérisé en ce que** l'angle de basculement du châssis (4) est d'environ 30° à environ 60°.

5. Ensemble de déchargement selon la revendication 4, **caractérisé en ce que** l'angle de basculement du châssis (4) est adapté pour être inférieur à celui nécessaire pour le déversement gravitaire des charges (3).

6. Ensemble de déchargement selon l'une quelconque des revendications précédentes, **caractérisé en ce que** la hauteur de la face supérieure de l'extrémité proximale du convoyeur (2) est adaptée pour que le bord supérieur de la paroi transversale (7) soit sensiblement au même niveau que ladite face supérieure lorsque le châssis (4) est dans sa position inclinée vers le convoyeur.

7. Ensemble de déchargement selon l'une quelconque des revendications précédentes, **caractérisé en ce que** les vitesses (V1, V2) sont déterminées de façon que la vitesse (V1) du convoyeur (2) est au moins trois fois supérieure à la vitesse d'élévation (V2) de la palette, et de préférence au moins cinq fois supérieure.

8. Ensemble de déchargement selon l'une quelconque des revendications précédentes, **caractérisé en ce que** les parois latérales (5, 6) du châssis (4) sont prolongées en haut par des plaques de guidage (14) aptes à s'étendre au-dessus de l'extrémité proximale du convoyeur (2) lorsque le châssis (4) est dans sa position inclinée.

9. Ensemble de déchargement selon l'une quelconque des revendications précédentes, **caractérisé en ce que** ledit châssis (4) est basculé à l'aide de moyens de basculement comportant une crémaillère en arc ce cercle (15) fixée sur la face extérieure de la paroi transversale (7) du châssis (4) et en prise avec une roue dentée (16) entraînée par un moteur électrique (17).

10. Ensemble de déchargement selon l'une quelconque des revendications précédentes, **caractérisé en ce que** le châssis (4) vient dans sa position inclinée en appui contre une structure d'appui (18) disposée entre le châssis (4) et l'extrémité proximale du convoyeur (2).

11. Ensemble de déchargement selon la revendication 10, **caractérisé en ce que** ladite structure d'appui (18) comporte une surface inclinée (19) formant butée au châssis (4) lors du basculement de celui-ci vers le convoyeur (2).

## Patentansprüche

1. Entladeanordnung, umfassend einen Förderer und eine Entladevorrichtung (1) übereinandergestapelter Lasten (3) wobei die Vorrichtung ein Gestell (4) umfasst, das zwei Seitenwände (5, 6) aufweist, die mittels einer transversalen Wand (7) miteinander verbunden sind, wobei das Gestell (4) nach oben offen ist und eine offene Fläche (8) aufweist, die der transversalen Wand (7) gegenüberliegt und derart nach hinten gerichtet ist, dass das Einführen einer beladenen Palette (10) in das Innere des Gestells (4) erlaubt ist, wobei das Gestell (4) um eine horizontale Achse (9) schwenkend montiert ist, um das Entleeren der Lasten (3) auf den Förderer (2) zu erlauben, wenn das Gestell in eine geneigte Position in Richtung des Förderers geschwenkt ist, wobei die Vorrichtung ferner Verlagerungsmittel (11) der Palette (10) von unten nach oben und umgekehrt im Inneren des Gestells (4) derart umfasst, dass das schrittweise Entleeren der Lasten (3) auf den Förderer (2) erlaubt ist, wenn das Gestell (4) in seiner geneigten Position ist; wobei die Vorrichtung **dadurch gekennzeichnet ist, dass** das Gestell (4) gegenüber dem Förderer (2) derart angeordnet ist, dass, wenn das Gestell (4) in seiner zum Förderer geneigten Position ist, der obere Rand seiner transversalen Wand (7) etwa auf der oberen Fläche des Förderers (2) ausgerichtet ist, wobei die Höhe der transversalen Wand (7) des Gestells (4) zu diesem Zweck definiert ist, und dass die Geschwindigkeit (V1) des Förderers (2) mehrfach höher als die Hubgeschwindigkeit (V2) der Palette (10) ist, um ein effizientes Abladen der Lasten zu erhalten.

2. Entladeanordnung nach Anspruch 1, **dadurch gekennzeichnet, dass** die Verlagerungsmittel der Palette Huborgane (11) aufweisen, die in den Seitenwänden (5, 6) entlang mindestens eines jeweiligen Längsschlitzes (12), der in der einen und der anderen derselben vorgesehen ist, synchronisiert verlagerbar angebracht sind.

3. Entladeanordnung nach Anspruch 2, **dadurch gekennzeichnet, dass** die Huborgane (11) mit einer Empfangsplatte (13) verbunden sind, die den beweglichen Boden des Gestells bildet.

4. Entladeanordnung nach einem der vorangehenden Ansprüche, **dadurch gekennzeichnet, dass** der Schwenkwinkel des Gestells (4) zirka 30° bis zirka 60° beträgt.

5. Entladeanordnung nach Anspruch 4, **dadurch gekennzeichnet, dass** der Schwenkwinkel des Gestells (4) ausgebildet ist, um kleiner als derjenige zu sein, der für das Abkippen der Lasten (3) durch Schwerkraft notwendig ist.

6. Entladeanordnung nach einem der vorangehenden Ansprüche, **dadurch gekennzeichnet, dass** die Höhe der oberen Fläche des proximalen Endes des Förderers (2) ausgebildet ist, damit sich der obere Rand der transversalen Wand (7) etwa auf derselben Ebene wie die obere Fläche befindet, wenn das Gestell (4) in seiner zum Förderer geneigten Position ist.

7. Entladeanordnung nach einem der vorangehenden Ansprüche, **dadurch gekennzeichnet, dass** die Geschwindigkeiten (V1, V2) derart bestimmt sind, dass die Geschwindigkeit (V1) des Förderers (2) mindestens drei Mal höher als die Hubgeschwindigkeit (V2) der Palette und vorzugsweise mindestens fünf Mal höher ist.

8. Entladeanordnung nach einem der vorangehenden Ansprüche, **dadurch gekennzeichnet, dass** die Seitenwände (5, 6) des Gestells (4) oben mit Führungsplatten (14) verlängert sind, die imstande sind, sich über das proximale Ende des Förderers (2) zu erstrecken, wenn das Gestell (4) in seiner geneigten Position ist.

9. Entladeanordnung nach einem der vorangehenden Ansprüche, **dadurch gekennzeichnet, dass** das Gestell (4) mit Hilfe von Schwenkmitteln geschwenkt wird, aufweisend eine kreisbogenförmige Zahnstange (15), die auf der Außenfläche der transversalen Wand (7) des Gestells (4) befestigt und mit einem Zahnrad (16) im Eingriff ist, das von einem Elektromotor (17) angetrieben wird.

10. Entladeanordnung nach einem der vorangehenden Ansprüche, **dadurch gekennzeichnet, dass** das Gestell (4) in seiner geneigten Position in Abstützung gegen eine Stützstruktur (18) gelangt, die zwischen dem Gestell (4) und dem proximalen Ende des Förderers (2) angeordnet ist.

11. Entladeanordnung nach Anspruch 10, **dadurch gekennzeichnet, dass** die Stützstruktur (18) eine geneigte Oberfläche (19) aufweist, die beim Schwenken des Gestells (4) zum Förderer (2) einen Anschlag für dieses bilden.

## Claims

1. An unloading assembly, comprising a conveyor (2) and device (1) for unloading superimposed loads (3), the device comprising a chassis (4) including two side walls (5, 6) connected to each other by a transverse wall (7), said chassis (4) being upwardly open and having an open face (8) opposite said transverse wall (7) and oriented in the rear so as to allow the insertion of a loaded pallet (10) inside the chassis (4), said chassis (4) being mounted tilting around the horizontal axis (9) so as to make it possible to empty the loads (3) onto the conveyor (2) when the chassis is tilted into an inclined position toward the conveyor, said device further including means (11) for moving the pallet (10) from bottom to top and vice versa inside said chassis (4) so as to allow gradual emptying of the loads (3) onto the conveyor (2) when the chassis (4) is in an inclined position; said device being **characterized in that** the chassis (4) being arranged across from the conveyor (2) such that, when the chassis (4) is in its position inclined toward the conveyor, the upper edge of its transverse wall (7) is substantially aligned on the upper face of the conveyor (2), the height of the transverse wall (7) of the chassis (4) being defined to that end, and **in that** the speed (V1) of the conveyor (2) being several times greater than the elevation speed (V2) of the pallet (10) so as to obtain effective removal of the loads.

2. The unloading assembly according to claim 1, **characterized in that** said means for moving the pallet include lifting means (11) mounted so as to be movable in a synchronized manner in the side walls (5, 6) along at least one respective longitudinal slit (12) provided in one and the other of the latter.

3. The unloading assembly according to claim 2, **characterized in that** said lifting members (11) are connected to a receiving plate (13) forming a moving bottom of the chassis.

4. The unloading assembly according to any one of the preceding claims, **characterized in that** the tilting angle of the chassis (4) is from about 30° to about 60°.

5. The unloading assembly according to claim 4, **characterized in that** the tilting angle of the chassis (4) is suitable for being less than that necessary for the gravitational pouring of loads (3).

6. The unloading assembly according to any one of the preceding claims, **characterized in that** the height of the upper face of the proximal end of the conveyor (2) is suitable for the upper edge of the transverse wall (7) to be substantially at the same level as said upper face when the chassis (4) is in its position inclined toward the conveyor.

7. The unloading assembly according to any one of the preceding claims, **characterized in that** the speeds (V1, V2) are determined such that the speed (V1) of the conveyor (2) is at least three times greater than the elevation speed (V2) of the pallet, and preferably at least five times greater.

8. The unloading assembly according to any one of the preceding claims, **characterized in that** the side walls (5, 6) of the chassis (4) are extended at the top by guide plates (14) able to extend above the proximal end of the conveyor (2) when the chassis (4) is in its inclined position.

9. The unloading assembly according to any one of the preceding claims, **characterized in that** said chassis (4) is tilted using tilting means including an arc of circle-shaped rack (15) attached on the outer face of the transverse wall (7) of the chassis (4) and engaged with a gear wheel (16) driven by an electric motor (17).

10. The unloading assembly according to any one of the preceding claims, **characterized in that** the chassis (4) enters its inclined position bearing against a support structure (18) positioned between the chassis (4) and the proximal end of the conveyor (2).

11. The unloading assembly according to claim 10, **characterized in that** said support structure (18) includes an inclined surface (19) forming a stop for the chassis (4) during the tilting of the latter toward the conveyor (2).
